Europäisches Patentamt

European Patent Office

Office européen des brevets

(19)

(11) Publication number: **0 100 214**

**B1**

(12) EUROPEAN PATENT SPECIFICATION

(45) Date of publication of patent specification: **08.06.88**

(51) Int. Cl.⁴: **F 24 F 11/02, A 01 K 1/00**

(21) Application number: **83304253.4**

(22) Date of filing: **22.07.83**

(54) Ventilation control.

(30) Priority: **27.07.82 GB 8221635**

(43) Date of publication of application:
**08.02.84 Bulletin 84/06**

(45) Publication of the grant of the patent:
**08.06.88 Bulletin 88/23**

(84) Designated Contracting States:
**DE GB NL**

(56) References cited:
**DE-A-1 956 659**

**H. SEUFERT & H.G. KOPP -
Stallklimaoptimierung mit Hilfe von
Prozessrechnern - LANDTECHNIK, vol. 37
(1982), Febr. no. 2, LEHRTE (DE), p. 98-100**

(73) Proprietor: **NATIONAL RESEARCH
DEVELOPMENT CORPORATION
101 Newington Causeway
London SE1 6BU (GB)**

(72) Inventor: **Moulsley, Leonard John
15 Ramsey Road
Barton-le-Clay Bedford (GB)**
Inventor: **Meeks, Ian Raymond
10 Judith Gardens
Potton, Sandy Bedfordshire (GB)**

(74) Representative: **Chandler, Derek Richard
Patent Department National Research
Development Corporation 101 Newington
Causeway
London SE1 6BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the ventilation of livestock raising houses.

Livestock which is kept wholly or partly indoors must have a properly controlled environment for a healthy existence and an efficient use of the food supplied. Incorrect conditions can impair weight gain and even lead to poor health or the rapid spread of disease. When the livestock is mature, i.e. growth is slow or stopped, and the outside conditions, temperature, wind, etc. are stable, a simple regime of heating and ventilation control can be used with manual or simple automatic adjustment of heating and ventilation at reasonable intervals, say at morning and evening between repeated day and night time settings. However when the livestock is growing and the outside conditions are varying, sometimes from hour to hour, sufficiently quick manual control for large raising houses is not practical nor can an operator, or simple automatic system, correctly assess the settings required from the numerous variables involved.

The journal Landtechnik, Vol. 37, February 1982, Lehrte (DE) at pages 98 to 100 discusses the intensive raising of pigs and suggests a control arrangement based on a process computer responsive to measurements of the actual valve of parameters of the pig and its environment. Such an arrangement requires measuring apparatus in the raising house to which the pigs must have access. As neither the nature nor occurrence of this access can be controlled the gaining of the measurements of the actual values will be expensive and unreliable.

It is an object of the invention to provide improved control of the ventilation of a livestock raising house.

According to the invention there is provided a raising house ventilation control system including ventilation air inlet means and air outlet means, wherein the control system includes reference means (CF2) to provide a current value of a time-based variable of minimum ventilation air speed (V min) as a ventilation requirement increasing with time in terms of growth state, represented by the weight and the number (n) of the creatures at a growth state, and means (CO) to respond to said current value and to the temperature outside the house to produce control actions to adjust the ventilation (VC, F) to produce a selected temperature (θ) within the house characterised in that said weight and said number of the creatures are theoretical expected values at a growth state.

The system may further include means to provide and control heating of the enclosed space to sustain a required, time-based temperature therein at said minimum ventilation of the space. The method may also include providing a sensor of the temperature of the enclosed space to provide to the control means an input of this condition. Other sensors of internal or external conditions may be incorporated. The entry of ventilation air may be regulated in terms of volume and speed.

There is thus provided a growth regime for growing creatures in which ventilation is increased with time in terms of growth state, which state may be represented by the weight of a number of the creatures, and temperature is reduced with growth state, there being a minimum air speed for the ventilation. Temperature may be reduced with growth state.

The desirable conditions for a particular type of livestock are reasonably well-established in terms of temperature and the amount of air needed. the relation of these conditions to the age of growing stock is also reasonably well established. For a small number of livestock, and where cost per head of stock is not a significant factor, it is easy to provide a suitable environment by regular manual checking of the conditions and appropriate adjustment of the heating and ventilation.

However large-scale livestock raising has quite different constraints. The main aim is the efficient conversion of the food supplied into livestock growth usually measured in terms of weight gain for a given amount of food supplied, although the time to achieve a commercially useful weight is also important. Other costs such as depreciation of buildings and equipment, energy for heating and ventilating and labour costs must all be taken into account. These considerations lead to a current raising technique based on very large raising houses with the lowest possible expenditure on fans and sensors, the avoidance of heating, unless essential, by cutting ventilation rates to reduce heat loss and the maximum use of natural unforced ventilation through vents and the like without too close attention to the quality of the control of the house conditions which is actually achieved. Another problem is the cost of reliable sensors for temperature and ventilation rate and the need to use several sensors in a large raising house. An individual stockman is assigned to as large a number of houses as he can cope with for the routine duties.

The present invention provides a technique for ventilation control based on the growth state of the creatures.

By way of example of the technique the raising of broiler poultry is described. Here the growth state is the estimated heat output of growing livestock by reference to the passage of growth time and the weight of the livestock.

Broiler poultry is generally raised from day-old chicks which are placed in a raising house and fed for about 8 weeks to a weight of about 2 kg. Initially the poultry requires a temperature of about 35°C. This temperature can be reduced over a period of about 3 weeks to 20°C at which value the temperature is to be maintained for the remaining 5 weeks. As well as temperature the air change rate must be adapted to the age of the livestock. Initially a low rate is adequate and this is useful as heat loss is minimised. However later on the individuals are larger and better ventilation is needed for health, especially as the larger individuals each generate more sensible heat and have an increased latent heat.

The technique provided by the invention includes the provision of a minimum ventilation rate related to growth time, weight and numbers so that conditions of contaminated air in the raising house are mitigated without excessive heat loss through excessive air change and loss of warmed air.

Embodiments of the invention will now be described in detail with reference to the accompanying drawings in which:—

Figure 1 shows a schematic diagram of a ventilation control arrangement for a poultry raising house, which arrangement embodies the invention, and

Figures 2 to 8 show details of a control circuit arrangement.

A poultry raising house RH is equipped with inlet ventilators IV, exhaust fans F, heaters H and air stirrers P. The number and rating of each of these items will vary with size and location of the house but crucial levels will be considered below. The control arrangement connects these items to a controller CO by means of which the items are selectively brought into action. The controller also receives information on actual and desired conditions in the raising house. The actual conditions are represented by the circle including the symbols V and $\theta$ together with the large arrow to indicate an air flow of controlled volume and temperature. A temperature sensor TS2 measures the outside temperature and supplies this to the controller (more than one outside sensor may be used for example to take account of air temperature variation with height from ground level). It is probably most convenient if the outside sensor is adjacent the inlet ventilators IV so that the temperature of the incoming air is used for control purposes.

Other or additional conditions may be sensed and taken into account by the control arrangement. Thus the direction and strength of the wind, the isolation and humidity and carbon dioxide level (in the house) may be sensed for this purpose as all contributing to the conditions around the stock.

The desired raising conditions are stored in a suitable store such as a memory CM from which they can be recovered by the controller CO as required. Conveniently the desired conditions can be stored as two control functions CF1, CF2. In the present embodiment the independent variable for both control functions is the time elapsed since the day-old chicks entered the raising house. This is shown as $t$. The dependent variables are the values of internal air temperature $\theta max$ and ventilation air change Vmin. The form of the variation of $\theta$ with $t$ is outlined above for poultry, falling from 35°C to 20°C over a period of 3 weeks and then steady at 20°C, while the ventilation air required rises steadily with growth time and expected weight with the important limit that the inlet air speed must never fall below a selected minimum $S_o$. The parameter $n$ alters the value of Vmin to adjust for the number of birds in the house. The controller may be provided with a keyboard KB so that variations from the regime defined by the control function can be entered by a user, for example to cope with emergencies. The keyboard also enables the number $n$ of chicks in the house to be entered as a starting condition and if the number of chicks or birds alters during the growth period. The controller is connected to the house via an interface, shown diagrammatically at CSI.

The operation of the arrangement described is as follows. When the day-old chicks are placed in the house the controller CO is reset to the zero on the time axes of the control functions to bring the house to the required conditions of 35°C at no less than minimum air speed $S_o$. These conditions are achieved by the controller causing the position of inlet vent IV and number and speed of fans F to be set having regard to the outside air temperature sensed by sensor TS2. The number and speed of the fans is chosen to produce the required inside temperatures. To prevent shock to the stock the controller can be arranged to limit the rate of alteration of conditions, especially when the birds are young.

As air speed is not easy to measure on a building the vent opening and fan use settings are selected by the controller from those available by using data initially supplied to it on the basis of maintaining the minimum inlet air speed at the vents. The control arrangement is such that the lowest air speed above the minimum will always be aimed for and the vent and fan settings calculated accordingly having regard to the outside temperature, the required inside temperature and the measured inside temperature. The minimum ventilation air and the inside temperature required will of course change as time passes from the introduction of the day-old chicks, in accordance with the control functions in the memory. If the miniumum ventilation of air flow as determined by the controller having regard to the inlet air speed minimum is such as to produce too low an internal temperature then the controller will detect this conflict of settings and cause the heaters H to be brought into use. If the air flow is above that for the minimum air speed and the inside temperature is too low the inside sensor TS1 can cut out some fans to allow the temperature to rise without too low a ventilation rate or air speed being reached. The inside temperature sensor TS1 is also used to ensure that too low a temperature is not brought about at the required minimum ventilation by calling for the use of the heaters. The stirring fans P can be brought into use by the controller in any suitable way, for example to bring warm air from the upper part of the house to the floor level.

More than one internal sensor of temperature can be used to avoid uneven conditions. Other aspects of the conditions in the raising house can also be controlled, e.g. the humidity, while water can be sprayed into the atmosphere in the house to be evaporated to bring about a reduction in temperature.

Once the regime has been started on the introduction of the chicks the controller adjusts the vents, fans and heaters from time to time having regard to the conditions required at that time, as indicated by the control functions, and the outside temperature.

It will be seen that the above control arrangement aims to ensure that the ventilation air never drops below the minimum required for the instantaneous age of the poultry while the temperature is always kept at the required level. In this way insufficient ventilation with risk of infection, excess ventilation with waste of body heat, overheating and chilling, which are also unhealthy, and wasteful use of the heaters are all reduced or avoided thus achieving a preferred regime with minimum costs and labour. The stockman can then concentrate on the direct care of the poultry or other stocks. Variations from the regime can be called for by use of the keyboard: if, for example, stock is transferred to a house when the stock is partly grown then a suitable point of the regime can be selected to start control.

The exact form of the raising house and vents, fans, etc. will vary with location, type of poultry or other stock. These matters will be readily understood from the above example by those skilled in the art. However it has been found that there are advantages in having fans and vents in the house walls rather than in the roof. The roof is then simpler and stronger and less costly. The fans and vents are more accessible for service in the walls and less affected by wind and have better overall performance in a cross-flow arrangement.

In a particular poultry raising house for 17,000 birds, some 67m long by 13.5m wide and 3m high at the ridge, 12 vents and 10 fans were used. The 12 vents along one long wall were simple "hopper" flaps driven by linear actuators through a linkage. A feedback potentiometer provides accurate position information to the controller. The fans were housed in boxes with built-in non-return flaps. The fans were in groups for switching with more or larger fans in the group for higher ambient temperature use to provide a proportionately larger air flow. The numbers in a group can be altered from time to time by the controller.

A suitable controller, keyboard and memory can be provided by one of the now widely available small computers such as those sold under the trade names or trade marks APPLE, "North Star Horizon" or PET. The size and speed will be set by the frequency of control action and scale of operation. The manner in which the computer or other controller is assembled and operated will be readily apparent to those skilled in the art and is not described in detail.

The temperature sensors are preferably platinum resistance or solid state linear devices e.g. Radio Spares RS590KM, rather than temperature-dependent resistors, e.g. thermistors, as their quality is justified by the stability of their measurement.

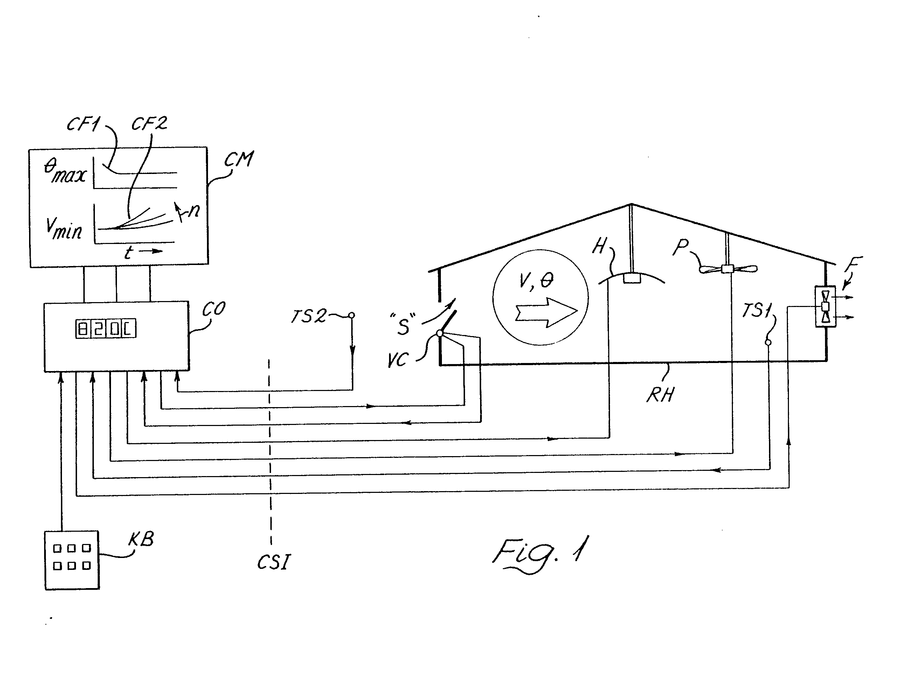

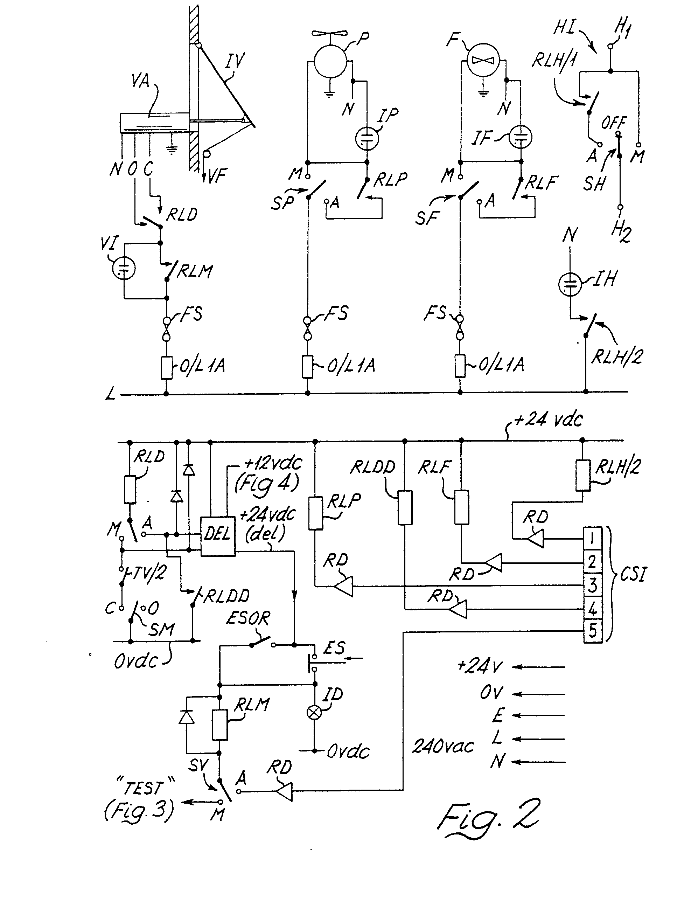

Figures 2 to 8 show details of a control arrangement for a poultry raising house for operation as described with reference to Figure 1. The control system interface, CSI, is shown in Figure 1 as a dotted line to indicate its possible schematic position.

Figures 2 and 3 show how connections from the controller CO are applied to operate fans vents etc. The array of fans, vents etc. mentioned above is represented in Figure 2 by one device of each type and the respective circuits will be increased as required. Thus for the vents the number of vents, N, may be 12, while for the fans N may be 10.

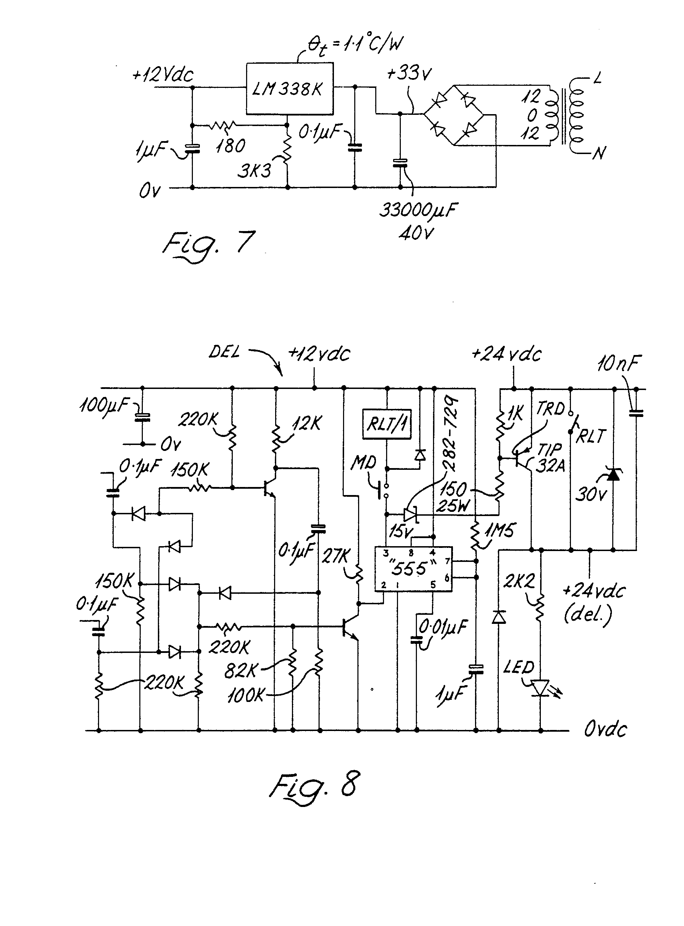

Each circuit has a separate connection in the interface CSI and the controller supplies a control instruction, which may be a change of logic level, to a respective driver circuit portion RD. One of these is shown in detail in Figure 6. Each driver RD is connected to a relay winding, such as RLP or RLF for fans, RLH for heaters, RLM for vents, to control through the respective relay contacts the appropriate device.

Device P is a fan to stir the atmosphere in the raising house. Device F is an extractor fan. These fans are supplied with power from the 240v a.c. mains through overload protectors O/L and fuses FS. Switches SF, SP permit the selection of manual (M) or automatic (A) operation. Automatic operation passes control of the device to the relay RLF or RLP as appropriate. The indicators IF, IP show whether or not the fan is energised. If multispeed fans are used then clearly the circuit can be modified to permit speed selection by, for example, providing extra relays and drivers.

The heaters are controlled via heater inhibit links HI which are connected in the heater control circuit at terminals H1, H2. Again a choice of manual and automatic operation is given, together with an "off" position, and an indicator IH operated by a second contact of relay RLH.

The inlet vents IV are operated by actuators VA which are electrically energised to open and close the vent panel. Switch SV selects the automatically controlled operation (A) of the vents or the test operation (TEST). In automatically controlled operation the relay driver for a particular vent will energise a respective relay RLM to cause a vent actuator to be energised via the contacts of relay RLM from the 240v a.c. mains through a fuse FS and an overload protector O/L. A further relay RLD has contacts interposed between the contacts of relay RLM and the actuator VA to select the "open" or "close" direction of operation of the actuator. Thus by selective energisation of relay RLD in combination with relay RLM the panel of a vent IV can be opened or closed as required by logic signals at terminals CSI.

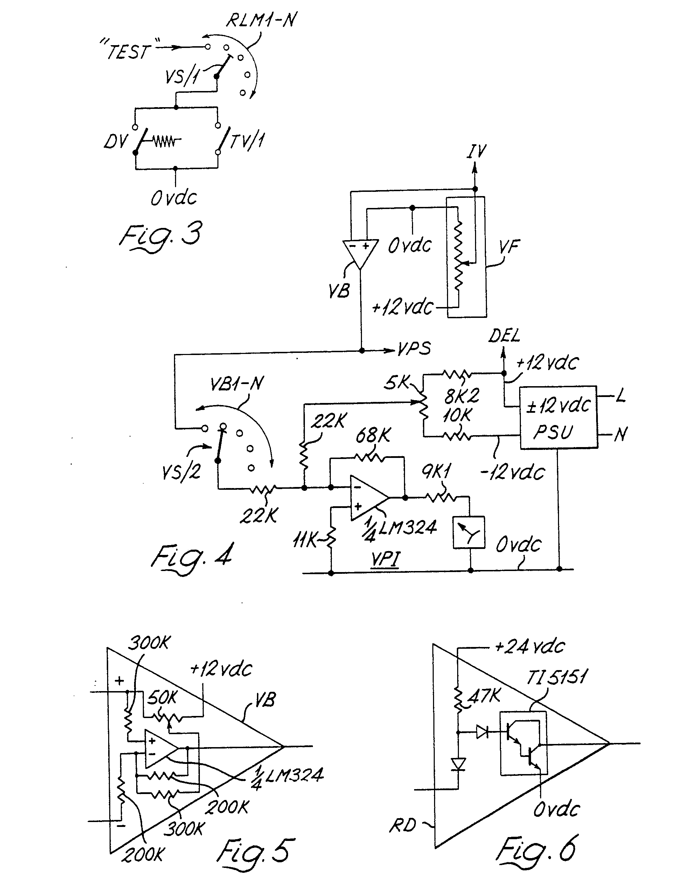

The degree to which the panel is opened (or closed) can also be controlled by logic signals applied at the terminals CSI. Figure 4 shows in outline one arrangement by which the panel position is converted to an electrical signal VPS. A variable resistor VF is linked to follow the panel of vent IV so that the slider is moved by the panel and the position of the slider along the resistance track represents the degree of opening of the panel. The resistance track is energised with a 12v d.c. supply and the slider potential connected to one input of a buffer amplifier VB. The other input is connected to one terminal (OV) of the d.c. supply. The output of the amplifier VB is thus a voltage VPS the value of which represents the degreed opening of the vent. This value is applied to the controller and compared with the degree of opening required. The relays RLM and RLD are then operated to move the vent to the required degree of opening.

Relay RLD is, in the preferred embodiment, not operated directly by a driver RD in response to a logic signal CSI but via another relay RLDD. Also relay RLM is energised from a separate supply DEL which is only made available after relay RLD has had time to operate. This ensures that sudden reversals of actuator operation cannot be called for. When several vents are provided on one house, as mentioned above, each will have a respective relay RLD but a common relay RLDD can be used for all the vents. In this way a rapid closing, or opening, of all vents can be achieved without having to give a direction instruction to each vent. This saves on instruction time between the controller and the vents. As shown in Figure 2 other features are included such as an emergency stop, ES, and an emergency stop over-ride, ESOR, for safety reasons. An indicator light, VI, indicates that a vent panel is being moved.

The delayed +24v d.c. supply DEL is shown in detail in Figure 8 and its operation will be apparent to those skilled in the art so no detailed description is given. An integrated circuit timer of the "555" type is used to give a delay of a few tens of milliseconds between the energisation of relay RLDD and the availability of +24v d.c. for relay RLM to start movement of actuator VA in a selected direction. Switch MD permits manual control via relay RLT/1 if transistor TRD should fail and also facilitates "on-line" replacement of TRD to avoid interuption of the control action on the raising house.

Figure 7 shows a suitable 24v d.c. stabilised power supply for the relays and other +24v d.c. loads. As the control signals CSI are applied one at a time in turn the maximum demand for current is not high as generally only a few relays are operating at any one moment of time.

Figure 6 shows details of the relay driver RD used to provide sufficient drive current from the CSI logic signals. Figure 5 shows the vent position signal buffer amplifier VB.

Figures 3 and 4 show details of a test and indicator arrangement for the vents. By operating switches SD and SV (Figure 2) to the manual position (M) control of the vent position is removed from the signals supplied at CSI to relays RLM and RLDD. Switch SM is now effective to select the close or open direction of vent actuation. Energisation of a vent actuator is by means of switch TV/1 ganged with TV/2. When several vents are provided a selector switch, VS/1 ganged with VS/2, permits the choice of a selected vent. Operation of switches TV/1, TV/2 and SM will now open or close a vent as required. Circuit VPI in Figure 4 is responsive to the value of vent position signal VPS to provide a meter indication of vent position.

As mentioned above the circuits for vents, fans and heaters can be repeated as required with a separate input at CSI for each circuit. However only one circuit RLDD is usually needed.

In a typical arrangement the operating cycle is as follows. At regular intervals, say 15 or 30 minutes, the value of the outside temperature is taken into the controller. As the number of birds is known then, for a given raising house construction, the vent position of the present age of the birds can be derived, from the control function, for the required minimum air flow. The controller, from the vent position signals, can determine the present position of each vent and thereby decide which vents to move and to what required position. The appropriate relays are then energised with signals via CSI and the vents moved so that the vent position signals are appropriate to the required position. The fans are also adjusted to give the required temperature at the required air flow. In addition to switch fans off and on the control arrangement can select certain set speeds for some fans to provide a finer degree of control.

The control arrangement is clearly flexible if day-to-day variation of circumstances occurs and can also easily cope with changes of required regime and in production rate. A single controller can be arranged to cover several raising houses. If raising houses are at different stages of a cycle the controller can control them all by a multiplier technique for respective desired conditions.

The technique provides an effective and efficient control of raising conditions for stock, particularly stock in which growth or other physical change changes the manner and balance of the production of body heat, so requiring a change in the ambient conditions as the stock may not be able, without stress, to cope with unchanged conditions because of limited natural ability to disperse or conserve heat.

Clearly the technique may be applied to the raising of other types of growing stock, in which case variables other than temperature and/or weight may be appropriate for the control function for the regime required.

**Claims**

1. A raising house ventilation control system including ventilation air inlet means and air outlet means, wherein the control system includes reference means (CF2) to provide a current value of a time-based variable of minimum ventilation air speed (V min) as a ventilation requirement increasing with time in terms of growth state, represented by the weight and the number (n) of the creatures at a growth state, and means (CO) to respond to said current value and to the temperature outside the house to produce control actions to adjust the ventilation (VC, F) to produce a selected temperature (θ) within the house characterised in that said weight and said number of the creatures are theoretical expected values at a growth state.

2. A system according to Claim 1 characterised in that the inlet means and outlet means are in the walls of the house.

3. A system according to Claim 1 characterised in that the inlet means comprises apertures of adjustable size.

4. A system according to Claim 1 characterised in that the outlet means comprises adjustable forced air extractors (F).

5. A system according to Claim 1 for specific growing creatures characterised in that the system includes means (CFI) to provide a further time-based variable of the selected temperature (θ max) required within the house, the temperature requirement decreasing with time in terms of growth state represented by said theoretical expected values of the weight and the number (n) of the creatures at a growth state.

6. A system according to Claim 1 characterised in that the system includes means to control the supply of heat to produce the selected temperature if the allowable minimum air speed produces a house temperature lower than the selected one.

7. A system according to Claim 6 characterised in that the system includes sensor (TS1) of the house temperature in the form of a platinum resistance or solid state linear device.

8. A system according to Claim 1 characterised by means to regulate the entry of ventilation air in terms of speed (S) through an aperture of set size.

## Patentansprüche

1. Lüftungsregelung für einen Aufzuchtstall mit einer Ventilationslufteinlaßeinrichtung und Luftauslaßeinrichtungen, wobei die Regelung Bezugseinrichtungen (CF2) umfaßt, die einen Stromwert einer Variablen auf Zeitbasis einer minimalen Ventilationsluftgeschwindigkeit (V min) als Ventilationserfordernis liefert, das mit der Zeit, ausgedrückt als Wachstumszustand zunimmt, dargestellt durch das Gewicht und die Anzahl (n) der in einem Wachstumsstadium befindlichen Tiere und Einrichtungen (CO), die auf diesen Stromwert und auf die Temperatur außerhalb des Hauses ansprechen und Regelwirkungen hervorrufen, um die Ventilation (VC, F) einzustellen und eine gewählte Temperatur (θ) innerhalb des Hauses zu erzeugen, dadurch gekennzeichnet, daß dieses Gewicht und diese Anzahl von Tieren theoretisch erwartete Werte bei einem Wachstumsstadium sind.

2. Lüftungsregelung nach Anspruch 1, dadurch gekennzeichnet, daß diese Einlaßeinrichtung und die Auslaßeinrichtung in den Wandungen des Gehäuses vorgesehen sind.

3. Lüftungsregelung nach Anspruch 1, dadurch gekennzeichnet, daß die Einlaßeinrichtung Öffnungen verstellbarer Größe umfaßt.

4. Lüftungsregelung nach Anspruch 1, dadurch gekennzeichnet, daß die Auslaßeinrichtung verstellbare Luftzwangsextraktoren (F) umfaßt.

5. Lüftungsregelung nach Anspruch 1 für spezifisch wachsende Tiere, dadurch gekennzeichnet, daß diese Lüftungsregelung Mittel (CFI) umfaßt, um eine weitere Variable auf Zeitbasis der gewählten innerhalb des Hauses erforderlichen Temperatur (θ max) zu schaffen, wobei die Temperaturanforderung mit der Zeit, ausgedrückt als Wachstumszustand, dargestellt durch diese theoretisch erwarteten Werte des Gewichts und der Anzahl (n) der Tiere bei einem Wachstumsstadium, abnimmt.

6. Lüftungsregelung nach Anspruch 1, dadurch gekennzeichnet, daß die Lüftungsregelung Einrichtungen umfaßt, die die Zufuhr von Wärme regeln, um die gewählte Temperatur zu erzeugen, wenn die zulässige minimale Luftgeschwindigkeit eine Stalltemperatur niedriger als die gewählte Temperatur erzeugt.

7. Lüftungsregelung nach Anspruch 6, dadurch gekennzeichnet, daß die Lüftungsregelung einen Sensor (TS1) der Stalltemperatur in Form eines Platinwiderstandes oder in Form eines linearen Festkörperbauteils umfaßt.

8. Lüftungsregelung nach Anspruch 1, gekennzeichnet durch Einrichtungen, die den Eintritt der Ventilationsluft in Form ihrer Geschwindigkeit (S) durch eine Öffnung vorgegebener Größe steuern.

## Revendications

1. Circuit de commande de ventilation d'un bâtiment d'élevage, comprenant un dispositif d'entrée et un dispositif de sortie d'air de ventilation, dans lequel le circuit de commande comporte un dispositif (CF2) de référence destiné à donner une valeur actuelle d'une variable dépendant du temps et relative à la vitesse minimale de l'air de ventilation (V min), constituant un critère de ventilation croissant au cours du temps en fonction de l'état de croissance, représenté par le poids et le nombre (n) des créatures à un état de croissance, et un dispositif (CO) sensible à la valeur actuelle et à la température régnant à l'extérieur du bâtiment et destiné à créer des actions de commande assurant le réglage de la ventilation (VC, F) afin qu'une température choisie (θ) soit produite dans le bâtiment, caractérisé en ce que le poids et le nombre des créatures sont des valeurs théoriques prévues à un état de croissance.

2. Circuit selon la revendication 1, caractérisé en ce que le dispositif d'entrée et le dispositif de sortie sont placés dans les parois du bâtiment.

3. Circuit selon la revendication 1, caractérisé en ce que le dispositif d'entrée comporte des ouvertures de dimension réglable.

4. Circuit selon la revendication 1, caractérisé en ce que le dispositif de sortie comprend des dispositifs réglables (F) d'extraction forcée d'air.

5. Circuit selon la revendication 1 destiné à des créatures à croissance déterminée, caractérisé en ce que le circuit comporte un dispositif (CFI) destiné à donner une autre variable dépendant du temps et représentative de la température choisie (θ max) qui est nécessaire dans le bâtiment, la température nécessaire diminuant au cours du temps en fonction de l'état de croissance représenté par les valeurs théoriques prévues du poids et du nombre (n) des créatures à un état de croissance.

6. Circuit selon la revendication 1, caractérisé en ce qu'il comprend un dispositif de réglage de la transmission de chaleur pour l'obtention de la température choisie lorsque la vitesse minimale permise d'air donne une température du bâtiment qui est inférieure à la température choisie.

7. Circuit selon la revendication 6, caractérisé en ce qu'il comprend un capteur (TS1) de la température du bâtiment sous forme d'une résistance au platine ou d'un dispositif linéaire à semiconducteur.

8. Circuit selon la revendication 1, caractérisé par un dispositif destiné à réguler l'entrée d'air de ventilation en fonction de la vitesse (S) dans une ouverture de dimension réglée.

Fig. 1

0 100 214

Fig. 2

Fig. 3

Fig. 4

Fig. 5

Fig. 6

3

*Fig. 7*

*Fig. 8*

4